# EUROPEAN PATENT SPECIFICATION

(11) **EP 4 212 396 B1**
(45) Date of publication and mention of the grant of the patent: **30.04.2025**
(21) Application number: 21866952.1
(22) Date of filing: 16.06.2021
(51) Int. Cl.: B60R 21/232, B60R 21/264, B60R 21/237, B60R 21/231, B60R 21/207, B60N 2/22, B60N 2/02, B60R 21/015

(54) **AIRBAG DEVICE FOR VEHICLE**
AIRBAGVORRICHTUNG FÜR EIN FAHRZEUG
DISPOSITIF COUSSIN DE SÉCURITÉ GONFLABLE POUR VÉHICULE

(30) Priority: 09.09.2020 KR 20200115646
(43) Date of publication of application: 19.07.2023
(73) Proprietor: Autoliv Development AB, 44783 Vargarda (SE)
(72) Inventor: GWON, Tae Ik, Hwaseong-si, Gyeonggi-do 18497 (KR); YOO, Wan Dong, Hwaseong-si, Gyeonggi-do 18497 (KR); LEE, Hyun Seop, Hwaseong-si, Gyeonggi-do 18497 (KR); OH, Nan Young, Hwaseong-si, Gyeonggi-do 18497 (KR); JUNG, Dae Chang, Hwaseong-si, Gyeonggi-do 18497 (KR)
(74) Representative: Feucker, Max Martin
(86) International application number: PCT/KR2021/007528
(87) International publication number: WO 2022/055081

(56) References cited:
- EP-A1- 2 003 024
- WO-A1-2019/057705
- KR-A- 20160 114 456
- KR-A- 20170 131 129
- KR-A- 20190 040 836
- US-A1- 2007 024 033

## Description

### Technical Field

The disclosure relates to an airbag device for a vehicle, and more particularly, to an airbag device for a vehicle which is inflated and deployed between an occupant and an inner side of the vehicle in the event of a side crash of the vehicle to protect the occupant.

### Background Art

In general, a vehicular airbag device is a safety device that protects an occupant by injecting gas into an airbag according to a signal of an impact detection sensor in the event of a vehicle crash, and rapidly inflating the airbag.

Such an airbag device is installed in a steering wheel, a dashboard, a seat, a sidewall, etc. provided in a vehicle, and protects an occupant by being inflated toward a front side or a side of the occupant in the event of a vehicle crash.

That is, a vehicle may be provided with a frontal airbag which is deployed in front of a driver seat and a passenger seat, a curtain airbag and a side airbag which are deployed from a side of a passenger to protect the passenger, and a knee airbag for protecting passenger's knees, etc.

Recently, autonomous vehicles moving by themselves without drivers' driving are developing.

The autonomous vehicle detects a condition of each device provided in the vehicle and a condition around the vehicle, by using a high-tech sensor that is capable of recognizing things around the vehicle and a high-performance graphic processing device, and travels while controlling an operation of each device provided in the vehicle according to a result of detecting.

The high-tech sensor may measure a distance between things like a human being, and may detect a danger and help the vehicle view all areas without a blind zone. In addition, the graphic processing device may grasp a surrounding environment of the vehicle through several cameras, and may analyze an image thereof and help the vehicle safely travel.

For example, the autonomous vehicle may have a LiDAR device, a sound wave device, a 3D camera, a radar device, etc. mounted therein.

As autonomous vehicles configured as described above do not require drivers to drive, all seats including a driver seat may freely rotate and an angle of a backrest may be adjusted to be horizontal by a tilting operation.

An occupant may adjust the angle of the backrest variously, and may rotate the seat and may have a meeting facing a passenger on a back seat.

Accordingly, it is impossible to apply a normal airbag device which is designed with reference to a posture of an occupant sitting on a seat facing forward to the autonomous vehicles.

Patent document 1 and patent document 2 presented below disclose a passenger protection system configuration for a vehicle.

As an occupant riding in an autonomous vehicle is not required to directly drive, the occupant may have a meeting or a conversation facing each other by swiveling a seat in a direction of left and right while moving to a destination, or may have a rest by reclining a backrest backward.

As such, As the seat and the backrest can be freely rotated in the forward and backward directions and in the left and right directions in the autonomous vehicle, the direction and the posture of the occupant may be variously changed.

In particular, when a vehicle crash occurs with the backrest being reclined backward, a curtain airbag or a side airbag according to the prior art may be deployed, but there may be an area where the side of the occupant is not protected.

For example, when the occupant reclines the backrest backward, the head region of the occupant may be placed at a lower position than the curtain airbag according to the related-art. An airbag device with the features of the preamble of claim 1 is known from WO 2019/057705 A1 and KR 2019 0040836 A.

Accordingly, there is a demand for an airbag technology for safely protecting an occupant who lies on a reclined backrest in the event of a vehicle crash.
(Patent Document 1) Korean Patent Registration No. 10-1916007(published on November 08, 2018)
(Patent Document 2) Korean Patent Registration No. 10-1781387(published on February 20, 2017)

### Disclosure of Invention

### Technical Problem

An object of the present disclosure is to solve the problems as described above, and is to provide an airbag device for a vehicle which can safely protect an occupant by inflating and deploying an airbag toward a side of the occupant in the event of a vehicle crash.

Another object of the present disclosure is to provide an airbag device for a vehicle which can safely protect an occupant who lies on a reclined backrest in an autonomous vehicle.

Still another object of the present disclosure is to provide an airbag device for a vehicle which can safely protect an occupant by combining a side airbag and a curtain airbag.

### Solution to Problem

To achieve the objects as described above, an airbag device for a vehicle according to the present disclosure is defined by claim 1.

### Advantageous Effects of Invention

According to the airbag device for the vehicle according to the present disclosure, an auxiliary chamber may be provided in a main chamber to correspond to the head region of an occupant who lies on backward, and the auxiliary chamber may be inflated and deployed according to a rotation angle of a backrest of a seat, thereby protecting the head region of the occupant.

Accordingly, according to the present disclosure, the occupant may be safely protected regardless of a rotation angle and a posture of the upper body of the occupant who lies on backward.

In addition, according to the present disclosure, when a rotation angel of the backrest is less than a preset angle, the auxiliary chamber is inflated and deployed later than after the main chamber is inflated and deployed, so that an injury of the occupant caused by an increased expansion thickness of a curtain airbag may be prevented.

In addition, according to the present disclosure, an occupant may be safely protected by combining a curtain airbag and a side airbag in an autonomous vehicle, regardless of a posture and an angle of the occupant.

### Brief Description of Drawings

FIG. 1 is a view illustrating a state in which a curtain airbag of a vehicle according to a prior art is inflated and deployed;
FIG. 2 is a configuration diagram of an airbag device for a vehicle according to a preferred embodiment of the present disclosure;
FIG. 3 is a development view of a curtain airbag illustrated in FIG. 2;
FIG. 4 is a view illustrating a state in which an auxiliary chamber overlaps a main chamber in the curtain airbag illustrated in FIG. 3.
FIG. 5 is a cross-sectional view taken on line A-A' shown in FIG. 4;
FIGS. 6 and 7 are views illustrating a state in which the curtain airbag is inflated and deployed in the event of a vehicle crash, respectively.

### Best Mode for Carrying out the Invention

Hereinafter, an airbag device for a vehicle according to a preferred embodiment of the present disclosure will be described in detail with reference to the accompanying drawings.

Hereinafter, a configuration of an airbag device installed in a driver seat of a normal vehicle will be described, and a direction of facing a front surface of the vehicle with reference to a driver seat will be referred to as a 'forward direction (F),' and a direction of facing a rear surface of the vehicle will be referred to as a 'backward direction (B)'. Along with these terms, terms indicating directions such as 'left side (L),' 'right side (R),' 'upward direction (U),' and 'downward direction (D)' are defined to indicate respective directions with reference to the forward direction and the backward direction described above. In addition, reference sign I shown in the drawings indicates an inward direction of the vehicle in a width direction of the vehicle, and reference sign O indicates an outward direction of the vehicle in the width direction of the vehicle.

Accordingly, the forward, backward (F, B) directions of the vehicle may be expressed as a horizontal direction, and the upward, downward (U, D) directions of the vehicle may be expressed as a vertical direction.

Prior to describing a configuration of the airbag device for the vehicle first according to a preferred embodiment of the present disclosure, a process in which an area where a curtain airbag may not protect an occupant depending on a posture of the occupant is generated will be described.

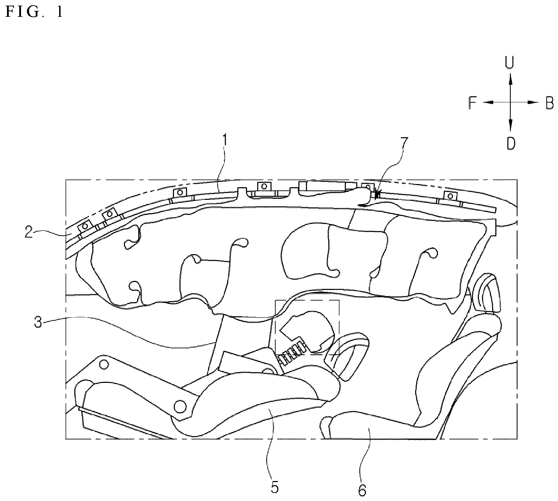

FIG. 1 is a view illustrating a state in which a curtain airbag of a vehicle according to a prior art is inflated and deployed.

As shown in FIG. 1, the curtain airbag 7 according to the prior art is inflated and deployed between an inner side of the vehicle and an occupant in the event of a side crash of the vehicle.

However, when the occupant reclines a backrest of a seat, for example, a front seat 5, backward at a predetermined angle, for example, 35°or more, the curtain airbag 7 of the vehicle according to the prior art may be inflated and deployed only up to a position higher than the head region of the occupant.

Because of this, there is a problem that an area where the curtain airbag 7 according to the prior art may not protect the head region of the occupant who reclines the backrest backward and lies thereon is generated.

Accordingly, the present disclosure provides an auxiliary chamber in a curtain airbag to protect the head region of an occupant when the backrest of a seat is reclined backward at a preset angle, for example, about 35°or more, and safely protects the occupant by selectively inflating and deploying the auxiliary chamber according to a rotation angle of the backrest.

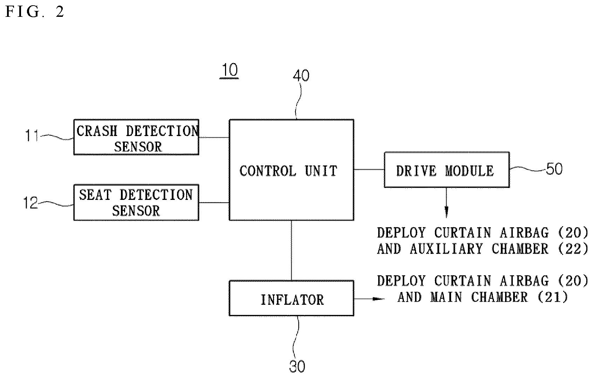

Next, a configuration of an airbag device for a vehicle according to a preferred embodiment of the present disclosure will be described in detail with reference to FIGS. 2 to 5.

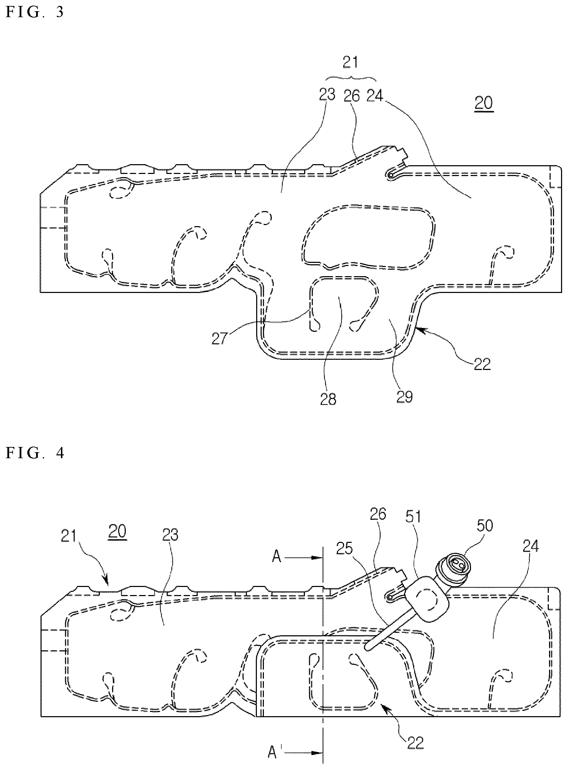

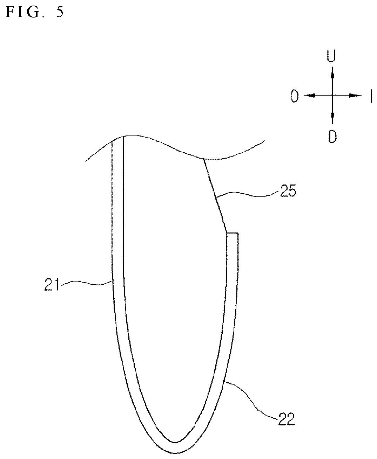

FIG. 2 is a configuration diagram of an airbag device for a vehicle according to a preferred embodiment of the present disclosure, and FIG. 3 is a development view of a curtain airbag illustrated in FIG. 2. In addition, FIG. 4 is a view illustrating a state in which an auxiliary chamber overlaps a main chamber in the curtain airbag illustrated in FIG. 3, and FIG. 5 is a cross-sectional view taken on line A-A' shown in FIG. 4.

Hereinafter, the present disclosure will be described by referring to an internal structure of the vehicle in which the curtain airbag 7 according to the prior art, as shown in FIG. 1, is mounted.

As shown in FIGS. 2 and 3, the airbag device 10 for the vehicle according to a preferred embodiment of the present disclosure includes a curtain airbag 20 which is inflated and deployed between an inner side of the vehicle and an occupant in the event of a vehicle crash, and an inflater 30 which supplies gas to the curtain airbag 20.

In addition, the airbag device 10 for the vehicle according to a preferred embodiment of the present disclosure may further include a control unit 40 to control an operation of the inflater 30 to inflate and deploy the curtain airbag 20 in the event of a vehicle crash.

The curtain airbag 20 includes a main chamber 21 which is inflated and deployed toward a side of the occupant, and an auxiliary chamber 22 which is inflated and deployed selectively according to an angle at which the occupant reclines the backrest of a seat backward.

The curtain airbag 20 may be formed in the form of a bag by sewing an external panel and an internal panel or a one-piece woven method. In addition, the curtain airbag 20 has a bag-like shape to restrict a expandable space therein by upper, lower walls and front, rear walls.

Such a curtain airbag 20 may be mounted in a roof side rail 1 of the vehicle in a folded or rolled state.

The inflater 30 is connected to the curtain airbag 20 to generate gas through a gas introduction part 26.

When a side crash or turnover of the vehicle occurs, a crash detection sensor 11 provided in the vehicle detects an impact, first, and an ignition signal of the control unit 40 that results from an impact detection signal generated from the crash detection sensor 11 is transmitted to the inflater 30. The inflater 30 generates gas by igniting an internal firer, and the gas generated from the inflater 30 is supplied into the curtain airbag 20.

When the gas is received from the inflater 30, the curtain airbag 20 is inflated and deployed downward along the inner side of the vehicle, thereby protecting an occupant. The curtain airbag 20 may protect occupants of a front seat 21 and a rear seat 23 simultaneously.

That is, the main chamber 21 may be provided with a length corresponding to the front seat 5 and the rear seat 6 of the vehicle.

To achieve this, the main chamber 21 may have a front seat protection area 23 and a rear seat protection area 24.

The front seat protection area 23 may entirely cover the inner side of the vehicle formed from a front filler 2 of the vehicle to a center filler 5 of the vehicle, and the rear seat protection area 24 may entirely cover the inner side of the vehicle formed from the center filler 3 of the vehicle to a rear filler 4 of the vehicle.

The front seat protection area 23 and the rear seat protection area 24 each may include a plurality of chambers which are partitioned by one or more non-expansive chamber walls.

The upper, lower, front, rear walls and the chamber walls may be formed by sewing internal, external panels of the curtain airbag 20, or by weaving in a one-piece woven method. Of course, the present disclosure is not limited thereto, and changes may be made to form the upper, lower, front, rear walls and the chamber walls in an appropriate method selected from various bonding methods such as an adhesive, RF welding, ultrasonic welding, or the like.

In the present embodiment, it is illustrated that the front seat and rear seat protection areas 23, 24 are provided in the curtain airbag 20, but the present disclosure is not limited thereto.

That is, it should be noted in the present disclosure that, when 3-row or 4-row seats are applied to the vehicle, changes may be made to the curtain airbag to have a length corresponding to all seats.

The auxiliary chamber 22 is inflated and deployed downward from a lower end of a rear side of the front seat protection area 23 so as to correspond to the head region of the occupant who reclines backward at the set angle or more.

That is, the auxiliary chamber 22 may be connected to the lower end of the rear side of the front seat protection area 23, and may be extended downward from the lower end of the rear side of the front seat protection area 23 by a preset length, for example, a length of about 10 cm to 30 cm, in the event of a vehicle crash.

The curtain airbag 20, when the auxiliary chamber 22 is folded, may be folded upward to overlap the main chamber 21, and may be folded or rolled along with the main chamber 21, as shown in FIGS. 4 and 5.

Accordingly, the present disclosure may safely protect the head region of the occupant even when the occupant reclines backward, by inflating and deploying the main chamber and the auxiliary chamber in the vent of a vehicle crash.

On the other hand, the auxiliary chamber 22 may have its position, shape, thickness changed so as to effectively protect the head region according to a posture and an angle of the occupant.

For example, the auxiliary chamber 22 may be changed to have not only a approximately rectangular shape but also various shapes such as a polygonal shape like a hexagonal shape, a circular shape, or an oval shape etc.

The auxiliary chamber 22 is divided into an internal chamber 28 and an external chamber 29 with reference to a chamber wall 23 which is provided as a non-expansive area as shown in FIG. 3.

The chamber wall 27 may be formed in various shapes approximately such as a curved shape like a 'C'-like shape, an arc shape, a semi-circular shape, a circular shape, an oval shape, a polygonal shape, etc.

The internal chamber 28 is provided inside the chamber wall with reference to the chamber wall, and the external chamber is provided outside the chamber wall.

Herein, the internal chamber 28 may be inflated and deployed with a thinner thickness than the external chamber 29, so as to fix the head region of the occupant being inserted into the internal chamber.

Of course, the internal chamber 28 also may be inflated and deployed with a thicker thickness than a thickness of the external chamber 29 when necessary.

In addition, the position where the auxiliary chamber 22 is connected with the main chamber 21 is not limited to a lower portion of the rear end of the front seat protection area 23, and changes may be made to connect the auxiliary chamber 22 to a lower portion of a front end of the rear seat protection area 24 so as to protect the head region of the occupant who lies on backward in excess of the set angle, that is, 35°.

Accordingly, a vertical length of the auxiliary chamber 22 may further be extended downward.

As described above, the present disclosure may change the installation position, shape, thickness of the auxiliary chamber variously to correspond to a position of the head region according to a posture and an angle of the occupant, thereby safely protecting the head region of the occupant.

On the other hand, the airbag device 20 for the vehicle according to a preferred embodiment of the present disclosure may further include a seat detection sensor 12 to detect an angle at which a backrest of a seat rotates in the forward and backward directions, a fixing member 25 to fix the auxiliary chamber 22 of the curtain airbag 20 in a folded state, and a drive module 50 which is driven to extend a length of the fixing member 25 according to a drive signal of the control unit 40 and to inflate and deploy the auxiliary chamber 22.

The seat detection sensor 11 may be installed on a rotation axis around which the backrest of a seat, for example, the front seat 5, rotates in the forward and backward directions, and generates an angle detection signal by detecting a rotation angle at which the backrest rotates in the forward and backward directions.

The control unit 40 may receive the angle detection signal, and, when the rotation angle of the backrest according to the received angle detection signal exceeds a predetermined setting angle, the control unit 40 may generate the drive signal to drive the drive module 50.

The fixing member 25 may be provided as a tether of a band shape that has preset width and length.

One end of the fixing member 25 may be fixed to have a part thereof received in a receiving pocket 51 connected with the drive module 50, and the other end of the fixing member 25 may be connected to an upper end of the auxiliary chamber 22 which is folded upward.

The drive module 50 and the receiving pocket 51 may be provided approximately on an upper end of a rear side of the main chamber 21. Of course, installation positions of the drive module 50 and the receiving pocket 51 may be variously changed.

The receiving pocket 51 may receive a part of one end of the fixing member 25, and may extend an overall length of the fixing member 25 by releasing one end of the fixing member 25 received from a fixed state by driving of the drive module 50.

The drive module 50 may be driven inside by a drive signal of the control unit 40, and may eject outside one end of the fixing member received in the receiving pocket 51 by breaking or damaging the receiving pocket 51.

Such a drive module 50 may be provided as a small inflater such as an active tether extensioner (ATE), and may generate gas according to the drive signal and may supply the gas to the receiving pocket 51.

As described above, the present disclosure provides the auxiliary chamber in the curtain airbag, and may safely protect the head region of the occupant by selectively inflating and deploying the auxiliary chamber based on an angle at which the backrest of the seat is reclined backward in the event of a side crash of the vehicle.

Meanwhile in the present embodiment, it is illustrated that the drive module is provided as a small inflater such as an ATE, but the present disclosure is not limited thereto.

That is, changes may be made to the present disclosure, such that the receiving pocket is removed, one end of the fixing member is wound around a wheel and fixed by applying a motor or an electrically-driven actuator to the drive module, and the drive module is driven according to a control signal of the control unit to release one end of the fixing member wound around the wheel and to extend the overall length of the fixing member.

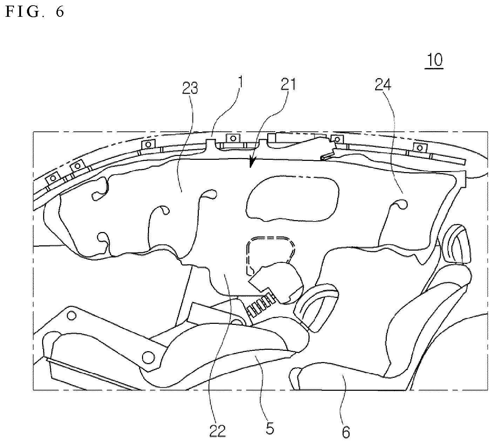

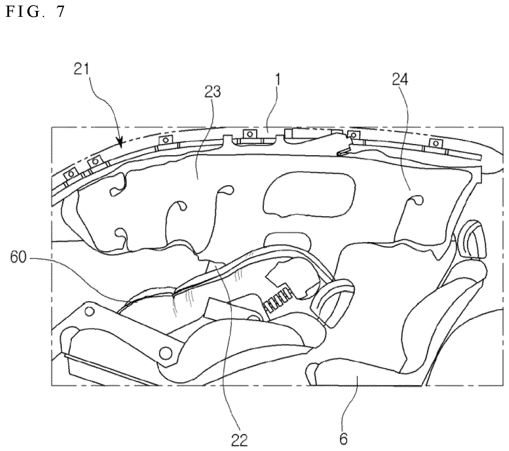

Next, a mounting structure of the airbag device for the vehicle and operating method thereof according to a preferred embodiment of the present disclosure will be described in detail with reference to FIGS. 6 and 7.

FIGS. 6 and 7 are views illustrating a state in which the curtain airbag is inflated and deployed in the event of a vehicle crash.

FIG. 6 illustrates a state in which the auxiliary chamber is inflated and deployed according to a rotation angle of the backrest, and FIG. 7 illustrates a state in which the curtain airbag and a side airbag are inflated.

First, an operator folds the auxiliary chamber 22 of the curtain airbag 20 upward to overlap the main chamber 21.

The operator then may store a part of one end of the fixing member 25 in the receiving pocket 51 and fix thereto, and connects the drive module 50 to one side of the receiving pocket 51.

Next, the operator connects the other end of the fixing member 25 to an upper end of the auxiliary chamber 22 folded upward in a sewing method.

Finally, the operator folds the main chamber 21 overlapping the auxiliary chamber 22 in a folding or rolling method, and installs the same in the side rail 1 of the vehicle, and connects the inflater 30 to the gas introduction part 26.

Through the process as described above, the airbag device 10 is mounted in the vehicle.

Meanwhile when a side crash or turnover of the vehicle occurs, the crash detection sensor 11 installed in the vehicle generates a crash detection signal.

Then, the control unit 40 outputs an ignition signal to the inflater 30 according to the crash detection signal, and the inflater 30 generates gas by igniting an internal firer according to the ignition signal. The gas generated from the inflater 30 may be supplied to an inside of the curtain airbag 20.

In this case, the control unit 40 may examine whether a rotation angle of the backrest is equal or greater than a predetermined setting angle based on a detection signal of the angle detection sensor 12 installed in the seat 5.

As a result, when the rotation angle of the backrest is equal or greater than the preset angle as a result of examining, the control unit 40 outputs a drive signal to the drive module 50 connected with the receiving pocket 51.

Then, the drive module 50 generates gas, thereby breaking or damaging the receiving pocket 51, and accordingly, one end of the fixing member 25 received in the receiving pocket 51 is ejected, and the overall length of the fixing member 25 is extended.

Accordingly, as shown in FIG. 6, the auxiliary chamber 22 folded upward may be inflated and deployed toward a lower portion of the main chamber 21, and the head region of the occupant may be safely protected by the auxiliary chamber 22.

In this case, the airbag device 10 for the vehicle according to a preferred embodiment of the present disclosure may safely protect the upper body and the pelvis region except for the head region of the occupant by inflating and deploying the side airbag 60 toward the side of the occupant, as shown in FIG. 7.

That is, the side airbag 60 may be received in the backrest of the seat 5, and may be ejected to the outside of the backrest and may be inflated and deployed between the occupant and the inner wall surface of the vehicle in the event of a vehicle crash.

The side airbag 60 may be extended by a length corresponding to the shoulder region and the pelvis region of the occupant, so as to safely protect the side of the occupant regardless of an angle and a posture of the occupant who reclines backward.

In addition, the overall length of the side airbag 60 when it is inflated and deployed may be adjusted according to a posture and a rotation angle of the occupant by using the fixing member 25 and the drive module 50 described above.

For example, as shown in FIG. 7, an upper end of the side airbag 60 may be extended up to a position corresponding to the head region of the occupant, and may overlap the auxiliary chamber 22 of the curtain airbag 20 when being inflated and deployed.

Therefore, the head region of the occupant may be safely protected by a portion that has a thickness increased by the side airbag 60 and the auxiliary chamber 22 of the curtain airbag 20 overlapping each other.

As described above, the present disclosure may safely protect the head region of the occupant by inflating and deploying the auxiliary chamber of the curtain airbag for protecting the head region of the occupant, and the upper end of the side airbag to overlap each other.

On the other hand, when the rotation angle of the backrest is less than the preset angle, the control unit 40 does not generate a drive signal for driving the drive module 50. Accordingly, the auxiliary chamber 22 may be maintained in an overlapping state with the main chamber 21.

As described above, the present disclosure provides the auxiliary chamber in the main chamber to correspond to the head region of the occupant who lies on backward, and may protect the head region of the occupant by inflating and deploying the auxiliary chamber according to a rotation angle of the backrest of the seat.

Accordingly, the present disclosure may safely protect the occupant regardless of a rotation angle and a posture of the upper body of the occupant who lies on backward.

In addition, in the present embodiment, it is illustrated that the auxiliary chamber 22 is selectively inflated and deployed according to a rotation angle of the backrest, but the present disclosure is not limited thereto.

That is, when the auxiliary chamber 22 overlaps the main chamber 21, an overall expansion thickness of the curtain airbag 20 increases.

Because of this, when the occupant collides with the inflated and deployed curtain airbag 20, a collision pressured applied to the occupant may increase by the curtain airbag 20 and may cause an injury to the occupant.

To solve this problem, the present disclosure may be changed by delaying a time at which the auxiliary chamber 21 is inflated and deployed later than a time at which the main chamber 21 is inflated and deployed when the rotation angle of the backrest is less than the preset angle.

For example, the control unit 40 may output a drive signal to inflate and deploy the auxiliary chamber 22 at a preset delay time, for example, by about 50 ms to 100 ms.

As described above, the auxiliary chamber of the present disclosure may be inflated and deployed later than the main chamber is inflated and deployed when the rotation angle of the backrest is less than the preset angle, so that an injury of the occupant caused by an increased expansion thickness of the curtain airbag may be prevented.

### Industrial Applicability

The present disclosure is applied to an airbag device technology for a vehicle, which provides an auxiliary chamber in a curtain airbag to correspond to the head region of an occupant who lies on backward, and inflates and deploys the auxiliary chamber according to a rotation angle of the backrest of a seat, thereby safely protecting the occupant regardless of a rotation angle and a posture of the upper body of the occupant.

## Claims

1. An airbag device (10) for a vehicle, the airbag device (10) comprising:
a curtain airbag (20) which is inflated and deployed between an inner side of the vehicle and an occupant in the event of a vehicle crash; and
an inflater (30) configured to supply a gas to the curtain airbag (20),
wherein the curtain airbag (20) comprises an auxiliary chamber (22) which is inflated and deployed at a position corresponding to a head region of the occupant when the occupant is reclined backward at a predetermined setting angle or more,
wherein the curtain airbag (20) further comprises a main chamber (21) which is inflated and deployed toward a side of the occupant,
wherein the auxiliary chamber (22) is disposed on the side of the occupant riding on a front seat (5) in the main chamber (21), and is connected to a rear end of a front seat protection area (23) for protecting the occupant, and
wherein the auxiliary chamber (22) is inflated and deployed downward from the main chamber (21) in the event of a vehicle crash, **characterized in that**
the auxiliary chamber (22) comprises an internal chamber (28) provided inside a chamber wall (23), and an external chamber (29) provided outside the chamber wall (23), and
wherein the internal chamber (28) and the external chamber (29) are inflated and deployed with different thicknesses.

2. The airbag device (10) of claim 1,
wherein the auxiliary chamber (22) is mounted in the vehicle while being folded upward to overlap the main chamber (21) and folded along with the main chamber (22) in a folding or rolling method.

3. The airbag device (10) of claim 1,
wherein the auxiliary chamber (22) has a position where the auxiliary chamber (22) is connected to the main chamber (21), a vertical length, an adjusted thickness so as to correspond to a posture and a rotation angle of the occupant.

4. The airbag device (10) of claim 1, further comprising:
a fixing member (25) configured to fix the auxiliary chamber (22) being folded upward;
a receiving pocket (51) configured to receive and fix a part of one end of the fixing member (25); and
a drive module (50) configured to extend an overall length of the fixing member (25) by damaging or breaking the receiving pocket (51) so as to allow the auxiliary chamber (22) to be inflated and deployed.

5. The airbag device (10) of claim 4, further comprising:
an angle detection (12) sensor configured to detect a rotation angle at which a backrest of a seat is rotated in forward and backward directions; and
a control unit (40) configured to control driving of the inflater (30) and the drive module (50),
wherein the control unit (40) is configured to generate an ignition signal to drive the inflater (30) in the event of a vehicle crash, and to generate a drive signal to drive the drive module (50) when the rotation angle detected by the angle detection sensor (12) is equal or greater than the preset angle.

6. The airbag device (10) of claim 5,
wherein, when the rotation angle detected by the angle detection sensor (12) is less than the preset angle, the control unit (40) is configured to generate the drive signal after a preset delay time subsequent to generating the ignition signal for the inflater (30), so as to inflate and deploy the auxiliary chamber (22) later than the main chamber (21).

7. The airbag device (10) of claim 1, further comprising:
a fixing member (25) configured to fix the auxiliary chamber (22) being folded upward; and
a drive module (50) configured to roll and fix a part of one end of the fixing member (25), and to extend an overall length of the fixing member (25) by releasing the fixing member (25) from the fixed state so as to inflate and deploy the auxiliary member in the event of a vehicle crash.

8. The airbag device (10) of claim 7, further comprising:
an angle detection sensor (12) configured to detect a rotation angle at which a backrest of a seat is rotated in forward and backward directions; and
a control unit (40) configured to control driving of the inflater (30) and the drive module (50),
wherein the control unit (40) is configured to generate an ignition signal to drive the inflater (30) in the event of a vehicle crash, and to generate a drive signal to drive the drive module (50) when the rotation angle detected by the angle detection sensor (12) is equal or greater than the preset angle.

9. The airbag device (10) of claim 8,
wherein, when the rotation angle detected by the angle detection sensor (12) is less than the preset angle, the control unit (40) is configured to generate the drive signal after a preset delay time subsequent to generating the ignition signal for the inflater (30), so as to inflate and deploy the auxiliary chamber (22) later than the main chamber (21).

10. The airbag device (10) of claim 1, further comprising
a side airbag (60) which is received in the backrest of the seat (5), has an overall length thereof adjusted based on a posture and an angle of the occupant in the event of a vehicle crash, and is inflated and deployed between the occupant and the inner side of the vehicle to protect a side of the occupant from the shoulder region to the pelvis region.

11. The airbag device (10) of claim 10,
wherein the side airbag (60) is extended upward to have an upper end overlap the auxiliary chamber (22) of the curtain airbag (20), and the upper end of the side airbag (60) protects the head region of the occupant.

## Patentansprüche

1. Airbagvorrichtung (10) für ein Fahrzeug, die Airbagvorrichtung (10) umfassend:
einen Vorhangairbag (20), der im Falle eines Fahrzeugunfalls aufgeblasen und zwischen einer Innenseite des Fahrzeugs und einem Insassen entfaltet wird; und
einen Gasgenerator (30), der konfiguriert ist, um dem Vorhangairbag (20) ein Gas zuzuführen;
wobei der Vorhangairbag (20) eine Nebenkammer (22) umfasst, die aufgeblasen und an einer Position entfaltet wird, die einem Kopfbereich des Insassen entspricht, wenn der Insasse um einen zuvor bestimmten Einstellwinkel oder mehr nach hinten geneigt ist,
wobei der Vorhangairbag (20) ferner eine Hauptkammer (21) umfasst, die aufgeblasen und in Richtung einer Seite des Insassen entfaltet wird,
wobei die Nebenkammer (22) auf der Seite des auf einem Vordersitz (5) sitzenden Insassen in der Hauptkammer (21) angeordnet ist und mit einem hinteren Ende eines Vordersitzschutzbereichs (23) zum Schützen des Insassen verbunden ist, und
wobei die Nebenkammer (22) im Falle eines Fahrzeugunfalls aufgeblasen und nach unten aus der Hauptkammer (21) entfaltet wird,
**dadurch gekennzeichnet, dass**
die Nebenkammer (22) eine innere Kammer (28), die innerhalb einer Kammerwand (23) vorgesehen ist, und eine äußere Kammer (29), die außerhalb der Kammerwand (23) vorgesehen ist, umfasst, und
wobei die innere Kammer (28) und die äußere Kammer (29) mit unterschiedlichen Dicken aufgeblasen und entfaltet werden.

2. Airbagvorrichtung (10) nach Anspruch 1,
wobei die Nebenkammer (22) in dem Fahrzeug montiert ist, während sie nach oben gefaltet ist, um die Hauptkammer (21) zu überlappen, und zusammen mit der Hauptkammer (22) in einem Falt- oder Rollverfahren gefaltet ist.

3. Airbagvorrichtung (10) nach Anspruch 1,
wobei die Nebenkammer (22) eine Position, an der die Nebenkammer (22) mit der Hauptkammer (21) verbunden ist, eine vertikale Länge, eine angepasste Dicke, um einer Haltung und einem Drehwinkel des Insassen zu entsprechen, aufweist.

4. Airbagvorrichtung (10) nach Anspruch 1, ferner umfassend:
ein Befestigungselement (25), das konfiguriert ist, um die Nebenkammer (22) nach oben gefaltet zu befestigen;
eine Aufnahmetasche (51), die konfiguriert ist, um einen Teil eines Endes des Befestigungselements (25) aufzunehmen und zu befestigen; und
ein Antriebsmodul (50), das konfiguriert ist, um sich durch Beschädigen oder Brechen der Aufnahmetasche (51) über eine Gesamtlänge des Befestigungselements (25) zu erstrecken, um das Aufblasen und Entfalten der Nebenkammer (22) zu ermöglichen.

5. Airbagvorrichtung (10) nach Anspruch 4, ferner umfassend
einen Winkelerkennungssensor (12), der konfiguriert ist, um einen Drehwinkel zu erkennen, um den eine Rückenlehne eines Sitzes in Vorwärts- und Rückwärtsrichtung gedreht wird; und
eine Steuereinheit (40), die konfiguriert ist, um den Antrieb des Gasgenerators (30) und des Antriebsmoduls (50) zu steuem,
wobei die Steuereinheit (40) konfiguriert ist, um im Falle eines Fahrzeugunfalls ein Zündsignal zu erzeugen, um den Gasgenerator (30) anzutreiben, und ein Antriebssignal zu erzeugen, um das Antriebsmodul (50) anzutreiben, wenn der durch den Winkelerfassungssensor (12) erfasste Drehwinkel gleich oder größer als der voreingestellte Winkel ist.

6. Airbagvorrichtung (10) nach Anspruch 5,
wobei, wenn der durch den Winkelerfassungssensor (12) erfasste Drehwinkel kleiner als der voreingestellte Winkel ist, die Steuereinheit (40) konfiguriert ist, um das Antriebssignal nach einer voreingestellten Verzögerungszeit im Anschluss an die Erzeugung des Zündsignals für den Gasgenerator (30) zu erzeugen, um die Nebenkammer (22) später als die Hauptkammer (21) aufzublasen und zu entfalten.

7. Airbagvorrichtung (10) nach Anspruch 1, ferner umfassend:
ein Befestigungselement (25), das konfiguriert ist, um die Nebenkammer (22) nach oben gefaltet zu befestigen; und
ein Antriebsmodul (50), das konfiguriert ist, um einen Teil eines Endes des Befestigungselements (25) aufzurollen und zu befestigen und sich über eine Gesamtlänge des Befestigungselements (25) durch Lösen des Befestigungselements (25) aus dem befestigten Zustand zu erstrecken, um das Nebenelement im Falle eines Fahrzeugunfalls aufzublasen und zu entfalten.

8. Airbagvorrichtung (10) nach Anspruch 7, ferner umfassend
einen Winkelerkennungssensor (12), der konfiguriert ist, um einen Drehwinkel zu erkennen, um den eine Rückenlehne eines Sitzes in Vorwärts- und Rückwärtsrichtung gedreht wird; und
eine Steuereinheit (40), die konfiguriert ist, um den Antrieb des Gasgenerators (30) und des Antriebsmoduls (50) zu steuem,
wobei die Steuereinheit (40) konfiguriert ist, um im Falle eines Fahrzeugunfalls ein Zündsignal zu erzeugen, um den Gasgenerator (30) anzutreiben, und ein Antriebssignal zu erzeugen, um das Antriebsmodul (50) anzutreiben, wenn der durch den Winkelerfassungssensor (12) erfasste Drehwinkel gleich oder größer als der voreingestellte Winkel ist.

9. Airbagvorrichtung (10) nach Anspruch 8,
wobei, wenn der durch den Winkelerfassungssensor (12) erfasste Drehwinkel kleiner als der voreingestellte Winkel ist, die Steuereinheit (40) konfiguriert ist, um das Antriebssignal nach einer voreingestellten Verzögerungszeit im Anschluss an die Erzeugung des Zündsignals für den Gasgenerator (30) zu erzeugen, um die Nebenkammer (22) später als die Hauptkammer (21) aufzublasen und zu entfalten.

10. Airbagvorrichtung (10) nach Anspruch 1, ferner umfassend
einen Seitenairbag (60), der in der Rückenlehne des Sitzes (5) aufgenommen ist, der eine Gesamtlänge davon aufweist, die basierend auf einer Haltung und einem Winkel des Insassen im Falle eines Fahrzeugunfalls angepasst wird, und der aufgeblasen und zwischen dem Insassen und der Innenseite des Fahrzeugs entfaltet wird, um eine Seite des Insassen von dem Schulterbereich bis zu dem Beckenbereich zu schützen.

11. Airbagvorrichtung (10) nach Anspruch 10,
wobei der Seitenairbag (60) sich nach oben erstreckt , so dass ein oberes Ende die Nebenkammer (22) des Vorhangairbags (20) überlappt, und das obere Ende des Seitenairbags (60) den Kopfbereich des Insassen schützt.

## Revendications

1. Dispositif de sac de sécurité gonflable (10) pour un véhicule, le dispositif de sac de sécurité gonflable (10) comprenant :
un sac de sécurité gonflable rideau (20) qui est gonflé et déployé entre un côté intérieur du véhicule et un occupant en cas d'accident de véhicule ; et
un gonfleur (30) conçu pour fournir un gaz au sac de sécurité gonflable rideau (20),
dans lequel le sac de sécurité gonflable rideau (20) comprend une chambre auxiliaire (22) qui est gonflée et déployée au niveau d'une position correspondant à une région de tête de l'occupant lorsque l'occupant est incliné vers l'arrière à un angle de réglage prédéterminé ou plus,
dans lequel le sac de sécurité gonflable rideau (20) comprend en outre une chambre principale (21) qui est gonflée et déployée vers un côté de l'occupant,
dans lequel la chambre auxiliaire (22) est disposée du côté de l'occupant assis sur un siège avant (5) dans la chambre principale (21), et est reliée à une extrémité arrière d'une zone de protection de siège avant (23) pour protéger l'occupant, et
dans lequel la chambre auxiliaire (22) est gonflée et déployée vers le bas à partir de la chambre principale (21) en cas d'accident de véhicule,
**caractérisé en ce que**
la chambre auxiliaire (22) comprend une chambre interne (28) située à l'intérieur d'une paroi de chambre (23), et une chambre externe (29) située à l'extérieur de la paroi de chambre (23), et
dans lequel la chambre interne (28) et la chambre externe (29) sont gonflées et déployées avec des épaisseurs différentes.

2. Dispositif de sac de sécurité gonflable (10) selon la revendication 1,
dans lequel la chambre auxiliaire (22) est montée dans le véhicule tout en étant pliée vers le haut pour chevaucher la chambre principale (21) et pliée avec la chambre principale (22) dans un procédé de pliage ou de roulage.

3. Dispositif de sac de sécurité gonflable (10) selon la revendication 1,
dans lequel la chambre auxiliaire (22) a une position dans laquelle la chambre auxiliaire (22) est reliée à la chambre principale (21), une longueur verticale, une épaisseur ajustée de manière à correspondre à une posture et à un angle de rotation de l'occupant.

4. Dispositif de sac de sécurité gonflable (10) selon la revendication 1, comprenant en outre :
un élément de fixation (25) conçu pour fixer la chambre auxiliaire (22) pliée vers le haut ;
une poche de réception (51) conçue pour recevoir et fixer une partie d'une extrémité de l'élément de fixation (25) ; et
un module d'entraînement (50) conçu pour étendre une longueur totale de l'élément de fixation (25) en endommageant ou en rompant la poche de réception (51) de manière à permettre à la chambre auxiliaire (22) d'être gonflée et déployée.

5. Dispositif de sac de sécurité gonflable (10) selon la revendication 4, comprenant en outre :
un capteur de détection d'angle (12) configuré pour détecter un angle de rotation auquel un dossier d'un siège est tourné dans des directions vers l'avant et vers l'arrière ; et
une unité de commande (40) configurée pour commander l'entraînement du gonfleur (30) et du module d'entraînement (50),
dans lequel l'unité de commande (40) est configurée pour générer un signal d'allumage pour entraîner le gonfleur (30) en cas d'accident de véhicule, et pour générer un signal d'entraînement pour entraîner le module d'entraînement (50) lorsque l'angle de rotation détecté par le capteur de détection d'angle (12) est égal ou supérieur à l'angle prédéfini.

6. Dispositif de sac de sécurité gonflable (10) selon la revendication 5,
dans lequel, lorsque l'angle de rotation détecté par le capteur de détection d'angle (12) est inférieur à l'angle prédéfini, l'unité de commande (40) est configurée pour générer le signal d'entraînement après un délai prédéfini suivant la génération du signal d'allumage pour le gonfleur (30), de manière à gonfler et à déployer la chambre auxiliaire (22) plus tard que la chambre principale (21).

7. Dispositif de sac de sécurité gonflable (10) selon la revendication 1, comprenant en outre :
un élément de fixation (25) conçu pour fixer la chambre auxiliaire (22) pliée vers le haut ; et
un module d'entraînement (50) conçu pour rouler et fixer une partie d'une extrémité de l'élément de fixation (25), et pour étendre une longueur totale de l'élément de fixation (25) en libérant l'élément de fixation (25) de l'état fixe de manière à gonfler et à déployer l'élément auxiliaire en cas d'accident de véhicule.

8. Dispositif de sac de sécurité gonflable (10) selon la revendication 7, comprenant en outre :
un capteur de détection d'angle (12) configuré pour détecter un angle de rotation auquel un dossier d'un siège est tourné dans des directions vers l'avant et vers l'arrière ; et
une unité de commande (40) configurée pour commander l'entraînement du gonfleur (30) et du module d'entraînement (50),
dans lequel l'unité de commande (40) est configurée pour générer un signal d'allumage pour entraîner le gonfleur (30) en cas d'accident de véhicule, et pour générer un signal d'entraînement pour entraîner le module d'entraînement (50) lorsque l'angle de rotation détecté par le capteur de détection d'angle (12) est égal ou supérieur à l'angle prédéfini.

9. Dispositif de sac de sécurité gonflable (10) selon la revendication 8,
dans lequel, lorsque l'angle de rotation détecté par le capteur de détection d'angle (12) est inférieur à l'angle prédéfini, l'unité de commande (40) est configurée pour générer le signal d'entraînement après un délai prédéfini suivant la génération du signal d'allumage pour le gonfleur (30), de manière à gonfler et à déployer la chambre auxiliaire (22) plus tard que la chambre principale (21).

10. Dispositif de sac de sécurité gonflable (10) selon la revendication 1, comprenant en outre :
un sac de sécurité gonflable latéral (60) qui est logé dans le dossier du siège (5), a une longueur totale qui est ajustée sur la base de la posture et de l'angle de l'occupant en cas d'accident de véhicule, et qui est gonflé et déployé entre l'occupant et le côté intérieur du véhicule pour protéger un côté de l'occupant, de la région de l'épaule à la région du bassin.

11. Dispositif de sac de sécurité gonflable (10) selon la revendication 10,
dans lequel le sac de sécurité gonflable latéral (60) est étendu vers le haut pour qu'une extrémité supérieure chevauche la chambre auxiliaire (22) du sac de sécurité gonflable rideau (20), et que l'extrémité supérieure du sac de sécurité gonflable latéral (60) protège la zone de la tête de l'occupant.
